# EUROPEAN PATENT SPECIFICATION

(11) **EP 2 338 771 B1**
(45) Date of publication and mention of the grant of the patent: **05.12.2012**
(21) Application number: 09425536.1
(22) Date of filing: 24.12.2009
(51) Int. Cl.: B62D 33/067

(54) **Device for the controlled tilting of driver's cabin of a vehicle**
Vorrichtung zum kontrollierten Neigen eines Führerraums eines Fahrzeuges
Dispositif d'inclinaison contrôlée de la cabine de conducteur dans un véhicule

(43) Date of publication of application: 29.06.2011
(73) Proprietor: Iveco S.p.A., 10156 Torino (IT)
(72) Inventor: Stuerner, Johann, 89079 Ulm (DE); Prina, Claudio, 13900 Biella (IT); Bezze, Massimo, 10080 S. Benigno Canavese (IT); De Medici, Lorenzo, 25126 Brescia (IT)
(74) Representative: Borsano, Corrado

(56) References cited:
- EP-A1- 0 318 438
- WO-A1-2007/061371
- US-A- 5 398 774

## Description

### Application field of the invention

The present invention relates to device for tilting a driver's cabin of a vehicle.

In particular, the invention is advantageously used for facilitating the controlled tilting of the driver's cabin, in order to allow the direct access to the engine compartment of a transport vehicle, such as, in non-limitative examples, a truck or similar used for commercial or industrial transport, or as a specialty vehicle such as a fire-fighting vehicle.

### Description of the prior art

In the field of commercial or industrial transport or of specialty vehicles, it is known in the art to use vehicles whose driver's cabin is placed over the engine compartment and is mounted so that it can be tilted, generally in a forward direction around a horizontal axis or pivot that is parallel to the front axle, in order to allow an easy and fast access to the engine, during the maintenance operations with the vehicle stationary. Examples of known devices for tilting a cabin of a transport vehicle are disclosed in US 5398774, WO 2007/061371 and EP 0318438. The preamble features of claim 1 are based on the disclosure of document US. 5398774.

At present, the controlled tilting of the driver's cabin is performed by means of one or two hydraulic cylinders, which are usually fixed, by one end, to a side point of the bottom of the driver's cabin, and, by the opposite end, to the vehicle frame, in order to provoke the cabin tilting by rotating it up to a predetermined limit angle of elevation which corresponds to the maximum allowed tilting. The cylinders may be manually operated or, preferably, they may be operated by means of an appropriate electric engine.

The dimensions of such cylinders must necessarily be such that they can bear the weight, that is usually high, of the driver's cabin.

Moreover, it is necessary that the driver's cabin is reinforced in correspondence of the points where the cylinders are fixed, in order to bear the thrust forces exerted by the cylinders themselves, and the dynamic stress drop, which contributes to a further increase of the weight of the cabin itself, and which often provokes structural twists of the cabin starting from the only side where the cylinder may be fixed, when it is the only one.

### Summary of the invention

The aim of the present invention is therefore to overcome the drawbacks of the prior art described above.

In particular, an aim of the present invention is to provide a device suitable for tilting the driver's cabin of a transport vehicle, which is light and easily applicable to the solutions known in the art.

A further aim of the present invention is to provide a device which facilitates the tilting of the driver's cabin of a transport vehicle by means of a dual dynamic action up to the maximum angle of elevation.

According to the present invention a device for tilting the driver's cabin of a transport vehicle is realized, characterized in that it comprises actuator means acting on said cabin in order to allow the rotation of the cabin itself around an axis and elastic means applied on said axis in order to facilitate said rotation in combination with said actuator means.

The subject of this invention is in particular a device for tilting the driver's cabin of a vehicle, and respective vehicle, as described more fully in the claims, which are an integral part of this description.

### Brief description of the Figures

The technical details and the advantages of the invention, according to the purposes mentioned above, will become more clear from the following detailed description given with reference to the figures attached hereto in which a preferred but non-limitative embodiment of the device, together with alternative embodiments, are shown, in which:
- figure 1 is a schematic view, with some parts removed for the sake of clarity, of a preferred embodiment of the device according to the invention applied to a driver's cabin of a transport vehicle, with an enlarged view of a first alternative embodiment of a detail;
- figure 2 shows a diagram of the forces developed during the tilting of the cabin, and an enlarged view of the pivot around which the cabin rotates.

In the drawings the same reference numbers and letters identify the same elements or components.

### Detailed description of preferred embodiments of the invention

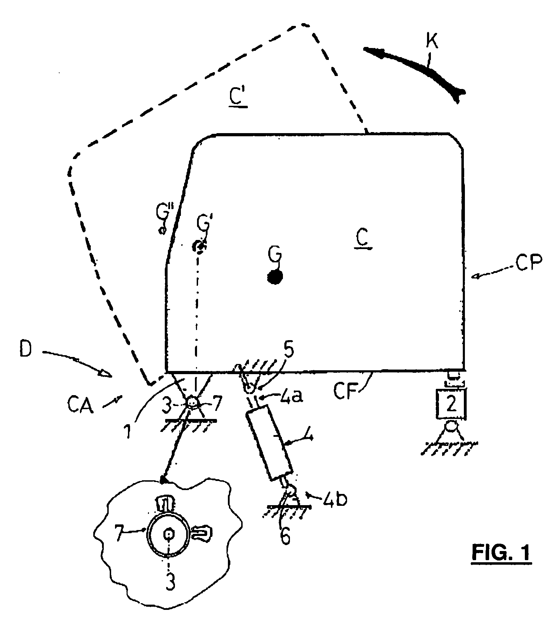

With reference to figure 1, D generally indicates a device suitable for determining the controlled tilting of a driver's cabin C of a transport vehicle (not shown), in order to allow the access to the engine compartment (known in the art and not shown) that is placed underneath.

According to what is shown in figure 1, the cabin C, starting from its normal position (indicated by a continuous line) with the rear part CP being fixed to and resting on a retainer 2, can be tilted around an horizontal axis or pivot 3, mounted on an appropriate support 1 in correspondence of the front part CA of the cabin C itself, by means of the thrust of one or two hydraulic cylinders 4, which are part of the device D. In the following, the case with a single cylinder is described in particular, as a non-limitative example.

The cylinder 4 can be manually operated or it can be operated by means of an electric control (known in the art and not shown), and one of its ends 4a is fixed to the cabin C in a point 5 in correspondence of the bottom surface CF of the cabin C itself, while its opposite end 4b is fixed in a point 6 of the frame of the transport vehicle.

The device D further comprises spring elastic means 7 acting and disposed on the mentioned pivot 3 and suitable for facilitating the tilting of the cabin C which is performed by means of the cylinder 4 around the horizontal pivot 3 itself. Specifically, the elastic means 7 are appropriately loaded by the force deriving from the weight of the cabin when rotating around the pivot 3, so that they assist the thrust force of the cylinder 4 for the forward tilting of the cabin C, namely by facilitating the counter-clockwise rotation shown in figure 1 (arrow K) of a centre of gravity point G in order to reach the neutral position G', in which the cabin C' (shown with a dotted line) is in a position of unstable equilibrium, having G' vertically aligned with the pivot 3.

In addition to such position of equilibrium and up to the limit angle of elevation, namely in a point G" in addition to G', during the rotation according to the sense of the arrow K, the elastic means 7 are suitable to oppose to a further rotation of the cabin C, assisting the restraining action performed by the cylinder 4.

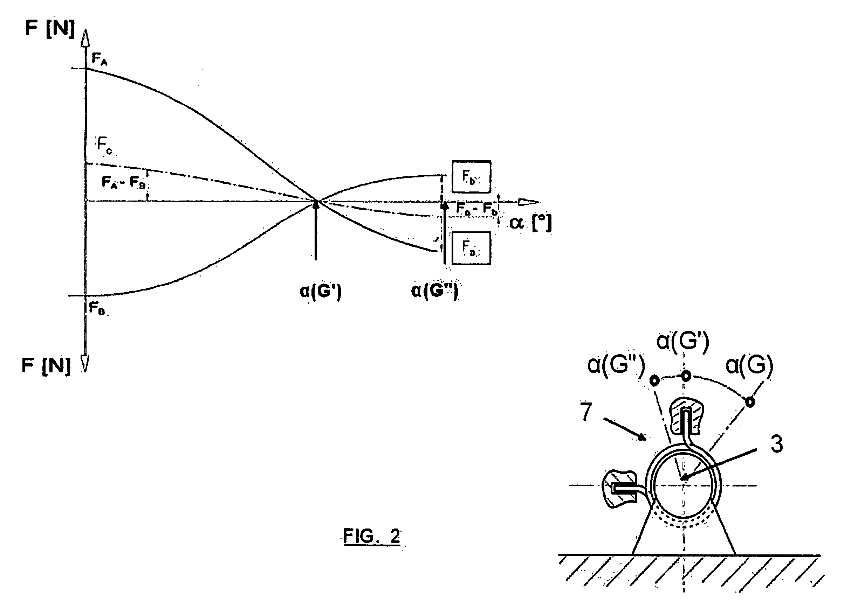

With reference to figure 2, FA indicates the trend of the overall force to be exerted for tilting the cabin as a function of the tilting angle α. As it can be seen, when α = 0(cabin at rest) the force to be exerted it maximum. Then the force decreases up to the value 0 for α = α(G') in the point of unstable equilibrium, after that it inverts the direction for angles α > α(G'), up to the maximum tilting at the value **F**ₐ corresponding to the angle α = α(G''). An equivalent representation can be seen in figure 2 showing an enlarged view of the pivot point 3. On the other hand, FB indicates the force trend of the spring elastic means 7, which is equivalent to FA but has the opposite sign. The way the elastic means 7 are loaded has to be pointed out. In the cabin neutral position α(G'), the force F_{B} has value zero and it is loaded in a direction up to the maximum value F_{B} when the cabin goes down in the position at rest for α = α(G), while it is loaded in the opposite direction up to the value F_{b} when the cabin is in the tilted position for an angle α = α(G''). Such loading occurs without any need for external energy, being determined just by the cabin's weight. In absolute value, FA > FB, therefore for tilting the cabin it is necessary to apply a further force contribution F_{c} by the cylinder 4, whose value must be higher than the difference FA - FB.

As a matter of fact, the position at rest of the spring elastic means 7 may advantageously correspond to the position of unstable equilibrium of the cabin.

According to what shown in the enlarged view of figure 1, the elastic means 7 preferably comprise, but are not limited to, a leaf spring 7 of the folded single-leaf type.

According to further alternative embodiments, the spring means 7 may comprise a leaf spring of the folded multi-leaf type, or a helical spring, or a torsion bar spring.

In all the possible alternative embodiments, the person skilled in the art is able to choose the type and the dimensions of the spring.

Preferably, the two ends of the spring are fixed respectively to a fixed part of the vehicle, such as to the frame, and to the cabin.

By introducing the elastic means 7 acting and disposed on the pivot 3, the device D according to the invention generates the following advantages:
- recovery of the energy deriving from the weight of the cabin C;
   - reduction of the dimensions of the cylinder 4, and therefore of the energy required for the tilting operations;
   - easier and faster tilting and repositioning of the driver's cabin C in its normal position.

## Claims

1. Device (D) for tilting the driver's cabin (C) of a transport vehicle, said device comprising actuator means (4) which act on said cabin (C) in order to allow the rotation of the cabin around an axis (3), said actuator means (4) exerting a thrust force for the forward tilting of the cabin (C) until said cabin (C) reaches a neutral position in which the cabin (C') is in a position of unstable equilibrium, said actuating means (4) exerting a restraining action on said cabin (C) during the rotation from said neutral position until said cabin (C) reaches a limit angle of elevation,
and spring elastic means (7) acting and disposed on said axis (3) in order to facilitate said rotation in combination with said actuator means (4), **characterised in that** said elastic means (7):
- assisting said thrust force of said actuator means (4) for the forward tilting of the cabin (C) until said cabin reaches said neutral position; and
- assisting said restraining action of said actuator means (4) during the rotation from said neutral until said cabin (C) reaches said limit angle of elevation.

2. Device according to claim 1, **characterized in that** said elastic means (7) comprise a leaf spring with at least a single leaf, or helical spring means, or torsion bar spring means.

3. Device according to claim 1 or 2, **characterized in that** said actuator means (4) comprise at least an hydraulic cylinder (4).

4. Transport vehicle, in particular for commercial or industrial transport, or specialty vehicle, **characterized in that** it comprises a device for tilting the driver's cabin according to any of the previous claims.

## Patentansprüche

1. Vorrichtung (D) zum Kippen der Fahrerkabine (C) eines Transportfahrzeugs, wobei die Vorrichtung ein Aktuatormittel (4) umfasst, das auf die Kabine (C) wirkt, um die Drehung der Kabine um eine Achse (3) zuzulassen, wobei das Aktuatormittel (4) eine Schubkraft für das Vorwärtskippen der Kabine (C) ausübt, bis die Kabine (C) eine neutrale Position erreicht, in der die Kabine (C') in einer Position eines instabilen Gleichgewichts ist, wobei das Aktuatormittel (4) eine Rückhaltewirkung auf die Kabine (C) während der Drehung aus der neutralen Position ausübt, bis die Kabine (C) einen Grenz-Steigungswinkel erreicht,
und ein elastisches Federmittel (7), das auf die Achse (3) wirkt und an dieser angeordnet ist, um die Drehung in Kombination mit dem Aktuatormittel (4) zu unterstützen,
**dadurch gekennzeichnet, dass** das elastische Mittel (7):
- die Schubkraft des Aktuatormittels (4) für das Vorwärtskippen der Kabine (C) unterstützt, bis die Kabine die neutrale Position erreicht; und
- die Rückhaltewirkung des Aktuatormittels (4) während der Drehung aus der Neutralen unterstützt, bis die Kabine (C) den Grenz-Steigungswinkel erreicht.

2. Vorrichtung nach Anspruch 1,
**dadurch gekennzeichnet, dass** das elastische Mittel (7) eine Blattfeder mit zumindest einem einzelnen Blatt oder ein Schraubenfedermittel oder ein Torsionsstab-Federmittel umfasst.

3. Vorrichtung nach einem der Ansprüche 1 oder 2,
**dadurch gekennzeichnet, dass** das Aktuatormittel (4) zumindest einen Hydraulikzylinder (4) umfasst.

4. Transportfahrzeug, insbesondere zum Nutz- oder Industrietransport, oder Sonderfahrzeug,
**dadurch gekennzeichnet, dass** es eine Vorrichtung zum Kippen der Fahrerkabine nach einem der vorhergehenden Ansprüche umfasst.

## Revendications

1. Dispositif (D) pour incliner la cabine de conduite (C) d'un véhicule de transport, ledit dispositif comprenant un moyen d'actionnement (4) qui agit sur ladite cabine (C) afin de permettre la rotation de la cabine autour d'un axe (3), ledit moyen d'actionnement (4) exerçant une force de poussée pour l'inclinaison vers l'avant de la cabine (C) jusqu'à ce que ladite cabine (C) atteigne une position neutre dans laquelle la cabine (C') est dans une position d'équilibre instable, ledit moyen d'actionnement (4) exerçant une action de retenue sur ladite cabine (C) pendant la rotation depuis ladite position neutre jusqu'à ce que ladite cabine (C) atteigne un angle limite d'élévation,
et un moyen élastique de ressort (7) agissant et disposé sur ledit axe (3) afin de faciliter ladite rotation en combinaison avec ledit moyen d'actionnement (4), **caractérisé en ce que** ledit moyen élastique (7) :
- assiste ladite force de poussée dudit moyen d'actionnement (4) pour l'inclinaison vers l'avant de ladite cabine (C) jusqu'à ce que ladite cabine atteigne ladite position neutre ; et
- assiste ladite action de retenue dudit moyen d'actionnement (4) pendant la rotation depuis ladite position neutre jusqu'à ce que ladite cabine (C) atteigne ledit angle limite d'élévation.

2. Dispositif selon la revendication 1, **caractérisé en ce que** ledit moyen élastique (7) comprend un ressort à lame avec au moins une lame unique, ou un moyen de ressort hélicoïdal, ou un moyen de ressort à barre de torsion.

3. Dispositif selon la revendication 1 ou 2, **caractérisé en ce que** ledit moyen d'actionnement (4) comprend au moins un vérin hydraulique (4).

4. Véhicule de transport, en particulier pour le transport commercial ou industriel, ou véhicule spécial, **caractérisé en ce qu'**il comprend un dispositif pour incliner la cabine de conduite selon l'une quelconque des revendications précédentes.
